# EUROPÄISCHE PATENTSCHRIFT

(11) **EP 0 897 208 B1**
(45) Veröffentlichungstag und Bekanntmachung des Hinweises auf die Patenterteilung: **24.10.2001**
(21) Anmeldenummer: 98113986.8
(22) Anmeldetag: 27.07.1998
(51) Int. Cl.: H02J 9/06, B60R 16/02, B60T 13/74

(54) **Sicherheitsrelevantes System, wie z. B. eine elektrische Bremsanlage oder eine elektrische Lenkanlage für ein Kraftfahrzeug**
Fail-safe system, e.g. electric brake system or electric steering system for a motor vehicle
Système de sécurité, par exemple pour système de freins électrique ou système de direction électrique

(30) Priorität: 09.08.1997 DE 19734598
(43) Veröffentlichungstag der Anmeldung: 17.02.1999
(73) Patentinhaber: Continental Aktiengesellschaft, 30165 Hannover (DE); Bayerische Motoren Werke Aktiengesellschaft, 80809 München (DE)
(72) Erfinder: Behrends, Holger, 30559 Hannover (DE); Dieckmann, Thomas, Dr., 30982 Pattensen (DE); Giese, Rainer, 85298 Scheyern (DE); Gräf, Michael, 80937 München (DE); Hudi, Ricky, 85092 Kösching (DE)
(74) Vertreter: Schneider, Egon

(56) Entgegenhaltungen:
- EP-A- 0 553 810
- EP-A- 0 574 743
- EP-A- 0 734 906
- WO-A-88/08380
- DE-A- 3 502 100
- US-A- 5 023 468

## Beschreibung

Die Erfindung betrifft ein sicherheitsrelevantes System, wie z.B. eine elektrische Bremsanlage oder eine elektrische Lenkanlage für ein Kraftfahrzeug, gemäß dem Oberbegriff des Anspruchs 1.

Bei der dort genannten ersten elektrischen Energiequelle handelt es sich beispielsweise um einen Generator oder um eine Batterie oder um eine Batterie, die mit einen Generator in Verbindung steht, wie z.B. bei einem Bordnetz eines Kraftfahrzeugs.

Ein sicherheitsrelevantes System ist beispielsweise aus der DE 35 02 100 A1 bekannt, wo es in einer Druckmittelbremsanlage für Kraftfahrzeuge eingesetzt wird. Im Normalbetrieb wird die Druckmittelbremsanlage von der elektrischen Energiequelle in Form einer Batterie versorgt, wobei deren momentane Betriebsspannung von einer Spannungsüberwachungseinrichtung überwacht wird. Eine durch Störung der Batterie unter einen Grenzwert abfallende momentane Betriebsspannung wird von der Spannungsüberwachungs einrichtung erfasst, woraufhin diese ein ihr zugeordnetes Umschaltelement anspricht, das die elektrischen Verbraucher der Druckmittelbremsanlage mit dem elektrischen Energiespeicher verbindet. Die Batterie wird von einem Generator geladen und sobald an ihr wieder die Nennspannung anliegt, wird von der Spannungsüberwachungseinrichtung wiederum das Umschaltelement angesprochen, das dann wieder auf Normalbetrieb der Druckmittelbremsanlage zurückschaltet. Fällt an dem elektrischen Energiespeicher infolge der Entladung die dortige momentane Betriebsspanung unter einen Grenzwert ab, so wird dies ebenfalls von der Spannungsüberwachungseinrichtung erfasst, die dann eine Ladeschalteinrichtung anspricht, die den zweiten elektrischen Energiespeicher dann mit dem Generator verbindet, so dass auch dieser geladen werden kann.

Die obigen Ausführungen zeigen, dass die aus der DE 35 02 100 A1 bekannte Druckmittelbremsanlage insofern als sicher zu bezeichnen ist, als dass die elektrischen Verbraucher der Druckmittelbremsanlage bei einer Störung der Batterie von einem zweiten elektrischen Energiespeicher versorgt werden. Die momentane Betriebsspannung der Batterie muss jedoch ständig von der Spannungsüberwachungseinrichtung erfasst werden und im Störungsfall muss diese das Umschaltelement ansteuern. Kommt es also an der Spannungsüberwachungseinrichtung zu einem Ausfall bzw. zu Fehlmessungen der momentanen Betriebsspannung bzw. zu einem Ausfall der Ansteuerleitung von der Spannungsüberwachungseinrichtung zu dem Umschaltelement, so ist ein Umschalten von der Batterie zu dem zweiten Energiespeicher nicht mehr möglich. In diesen Fällen ist also die Sicherheit der Druckmittelbremsanlage beeinträchtigt. Darüber hinaus weist das aus der DE 35 02 100 A1 bekannte sicherheitsrelevante System einen komplizierten Aufbau auf.

Aus der EP 0 734 906 A2 ist bereits ein sicherheitsrelevantes System der eingangs genannten Art bekannt, bei dem das Umschaltelement als Diode ausgebildet ist. Sinkt die momentane Betriebsspannung der Energiequelle unter einen Grenzwert, so verbindet das Umschaltelement die Verbraucher automatisch mit dem Energiespeicher, so dass sie weiterhin mit elektrischer Energie versorgt werden. Eine Überwachung und ein gezieltes Umschalten des Umschaltelementes ist also bei dem aus der genannten Druckschrift bekannten System nicht notwendig. Es ist jedoch festzustellen, dass mit diesem System eine gezielte Kompensation des Entleerungsvorganges des Energiespeichers aufgrund einer Versorgung der Verbraucher des sicherheitsrelevanten Systems nicht möglich ist.

Aus der EP 0 574 743 A2 ist eine Spannungsversorgungsvorrichtung für eine insbesondere in einem Fahrzeug angeordneten Computerelektronik bekannt, deren Speicher über einen Pufferakkumulator gespeist sind und deren Spannungsversorgungsleitung jeweils abhängig von einer Betriebsstellung eines Zündschalters von einem Startakkumulator gespeist wird, der jeweils in einer Anlassstellung einen Anlasser speist, wobei jeweils ein die Betriebsstellung anzeigendes Betriebssignal einem leicht verzögert ansprechenden und stark verzögert abfallenden Zeitschaltglied zugeführt ist, das von dem Pufferakkumulator und parallel dazu über eine Entkoppeldiode von dem Startakkumulator gespeist ist und das jeweils betätigt die so gebildete Versorgungsspannung auf die Spannungsversorgungsleitung schaltet.

Im Grundbetriebszustand des Systems arbeitet die Schaltung derart, daß die Nennspannung des zweiten Energiespeichers kleiner ist als die Nennspannung der Energiequelle und dass das Umschaltelement derartig ausgebildet ist, dass es automatisch - d.h. ohne Spannungsmessung an der elektrischen Energiequelle - auf eine Versorgung der elektrischen Verbraucher des sicherheitsrelevanten Systems mit Hilfe des elektrischen Energiespeichers umschaltet, wenn die momentane Betriebsspannung der elektrischen Energiequelle kleiner als die momentane Betriebsspannung des elektrischen Energiespeichers ist.

Der Erfindung liegt die Aufgabe zugrunde, ein sicherheitsrelevanes System der eingangs genannten Art derart weiterzubilden, dass ein gezieltes Nachladen des Energiespeichers möglich ist.

Ausgehend von einem sicherheitsrelevanten System der eingangs genannten Art wird die Aufgabe durch die kennzeichnenden Merkmale des Anspruchs 1 gelöst.

Die Nennspannung des Energiespeichers wird so gewählt, dass dieser dazu in der Lage ist, die elektrischen Verbraucher des sicherheitsrelevanten Systems ausreichend mit elektrischer Energie zu versorgen. Bei der Erfindung wird sich zu Nutze gemacht, dass die elektrischen Verbraucher in einem sicherheitsrelevanten System derartig beschaffen sind, dass sie mit unterschiedlichen Betriebsspannungen betrieben werden können. Dadurch wird es möglich, zwei elektrische Energieversorgungen mit unterschiedlichen Nennspannungen bereitzustellen.

Der Vorteil der Erfindung ist darin zu sehen, dass der elektrische Energiespeicher "nachgeladen" werden kann, so dass eine Selbstentladung des Energiespeichers im Laufe der Zeit oder eine Entleerung des Energiespeichers aufgrund einer Versorgung der elektrischen Verbraucher des sicherheitsrelevanten Systems durch diesen kompensiert werden kann. Hierbei ist eine Ladung des elektrischen Energiespeichers solange möglich, wie die momentane Betriebsspannung der elektrischen Energiequelle größer als die momentane Betriebsspannung des elektrischen Energiespeichers ist. Eine Ladung des elektrischen Energiespeichers ist also auch dann noch möglich, wenn die elektrische Energiequelle, stark belastet ist. Aus den genannten Gründen ist eine lange Lebensdauer und stets volle verfügbare Kapazität des Energiespeichers sichergestellt.

Gemäß einer Weiterbildung der Erfindung nach Anspruch 2 weist die Lade-/Trennschaltung ein oder mehrere Elemente auf, das bzw. die die Funktion eines Spannungstransformators ausüben und das bzw. die die von der elektrischen Energiequelle bereitgestellte momentane Betriebsspannung auf die Ladespannung transformieren, die zur Ladung des elektrischen Energiespeichers benötigt wird. Der Vorteil dieser Weiterbildung ist darin zu sehen, dass, da während des Ladevorgangs die momentane Betriebsspannung an der elektrischen Energiequelle immer größer ist, als die Nennspannung des elektrischen Energiespeichers, die genannten Elemente die momentane Betriebsspannung der elektrischen Energiequelle nur "herunterzutransformieren" brauchen. Derartige Spannungstransformatoren können sehr einfach und damit zuverlässig und preiswert realisiert-werden. Die von dem elektrischen Energiespeicher zur optimalen Aufladung benötigte Ladespannung wird beispielsweise von Sensoren erfasst und an die Lade-/Trennschaltung weitergegeben, so dass die spannungstransformierenden Elemente der Lade-/Trennschaltung einen entsprechenden Spannungswert erzeugen können.

Gemäß einer Weiterbildung der Erfindung nach Anspruch 3 enthält das sicherheitsrelevante System einen Warnungsmelder, der automatisch ein Warnsignal abgibt, wenn durch das Umschaltelement ein Strom fließt. Der Warnungsmelder kann optisch und/oder akustisch ausgebildet sein und die Erregung für den Warnungsmelder liegt vorzugsweise in Reihe mit dem Umschaltelement. Der Vorteil dieser Weiterbildung ist darin zu sehen, dass der Warnungsmelder automatisch ein Warnsignal abgibt, wenn das sicherheitsrelevante System von dem elektrischen Energiespeicher versorgt wird. Somit warnt das sicherheitsrelevante System zuverlässig, da eine separate Ansteuerung des Warnungsmelders, in der es eventuell zu Fehlern kommen könnte, entfällt.

Ein Ausführungsbeispiel und weitere Vorteile der Erfindung werden im Zusammenhang mit den nachstehenden Figuren erläutert, darin zeigt:
- Figur 1: ein sicherheitsrelevantes System in schematischer Darstellung,
- Figur 2: eine Lade-/Trennschaltung in schematischer Darstellung.

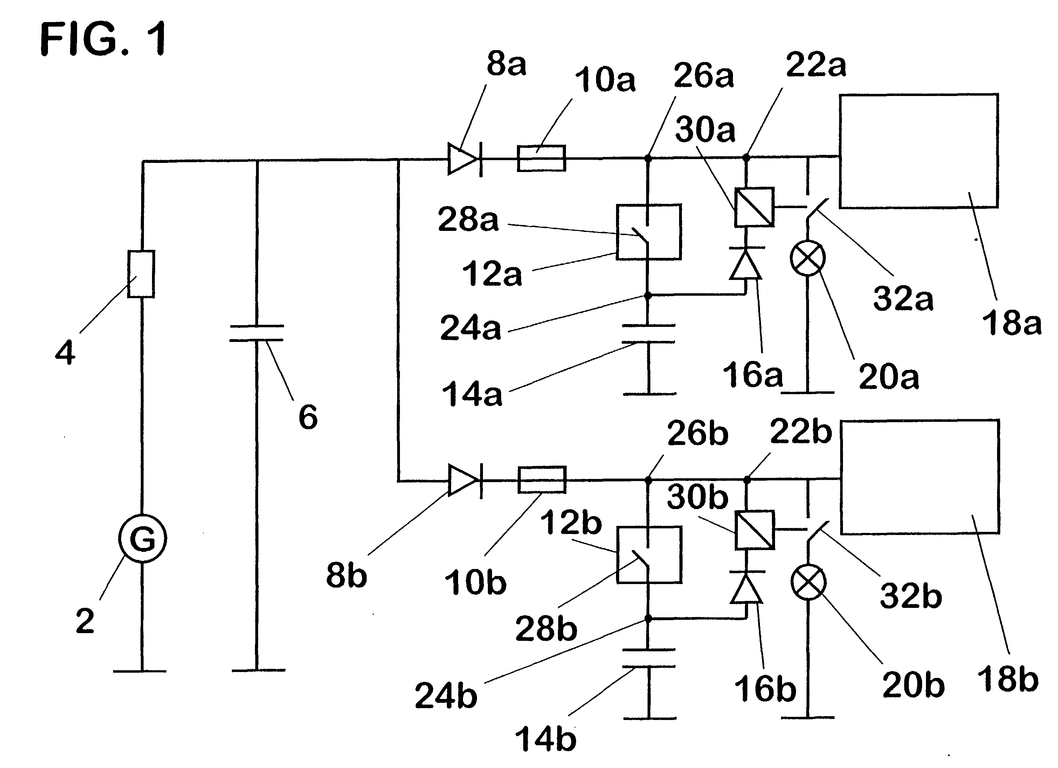

Figur 1 zeigt ein sicherheitsrelevantes System in schematischer Darstellung, das zwei Zweige aufweist, wobei in dem ersten Zweig die Bezugsziffern mit dem Buchstaben a und in dem zweiten Zweig die Bezugsziffern mit dem Buchstaben b versehen sind. Bei dem ersten Zweig handelt es sich beispielsweise um einen Kreis einer elektrischen Bremsanlage und bei dem zweiten Zweig beispielsweise um einen Kreis einer elektrischen Lenkanlage eines Kraftfahrzeuges. Da die in den beiden Zweigen ablaufenden Vorgänge einander entsprechen, wird im Folgenden nur auf den ersten Zweig Bezug genommen.

Das sicherheitsrelevante System weist eine elektrische Energiequelle in Form eines Bordnetzes mit einem Generator 2, einem Ladekreis 4 und einer Batterie 6 auf. Das Bordnetz weist eine Nennspannung von U₁ Volt auf und kann über die Diode 8a und die Sicherung 10a die mit einer variablen Betriebsspannung versorgbaren elektrischen Verbraucher 18a, mit elektrischer Energie versorgen. Darüber hinaus weist das sicherheitsrelevante System einen elektrischen Energiespeicher 14a in Form einer Batterie 14a auf, die eine Nennspannung von U₂ Volt bereitstellen kann, wobei im Normalbetrieb des Systems U₂ < U₁ gilt. Die Batterie 14a steht über ein Umschaltelement 16a und einen Erreger 30a in Form eines Relais 30a mit den elektrischen Verbrauchern 18a des sicherheitsrelevanten Systems in Verbindung und kann diese bei einem kritischen Spannungsabfall in dem Bordnetz mit Spannung versorgen. Das Umschaltelement 16a übernimmt die Funktion einer Diode, deren Durchlassrichtung von der Batterie 14a zu den Verbrauchern 18a weist (im einfachsten Fall kann das Umschaltelement als Diode ausgebildet sein, so dass in der Figur 1 das Umschaltelement 16a entsprechend als Diode eingezeichnet ist). Darüber hinaus kann die Batterie 14a über die Lade-/Trennschaltung 12a, die Sicherung 10a und die Diode 8a im Bedarfsfall von dem Bordnetz geladen werden. Im Folgenden wird erläutert, wie die elektrischen Verbraucher 18a des sicherheitsrelevanten Systems mit elektrischer Energie versorgt werden.

Im Normalbetrieb, d.h. wenn die momentane Betriebsspannung des Bordnetzes über U₂ liegt, werden die elektrischen Verbraucher 18a über die Diode 8a und die Sicherung 10a von dem Bordnetz mit elektrischer Energie versorgt. Es ist dann die Batterie 14a an der Versorgung der elektrischen Verbraucher 18a nicht beteiligt, da während des Normalbetriebes das Potential am Ausgang 22a des Umschaltelementes 16a größer als U₂ ist, während das Potential am Eingang 24a des Umschaltelementes 16a maximal U₂ (was der Nennspannung der zweiten Batterie 14a entspricht) beträgt, (am Ausgang 22a des Umschaltelementes 16a liegt im Normalbetrieb nämlich im Wesentlichen das Potential an, das der momentanen Betriebsspannung des Bordnetzes entspricht, zu parasitären Spannungsabfällen kommt es nur an der Diode 8a und der Sicherung 10a, diese sind zu vernachlässigen). Somit ist im Normalbetrieb ein Stromfluss von der Batterie 14a über das Umschaltelement 16a und den Erreger 30a zu den elektrischen Verbrauchern 18a nicht möglich. Die Batterie 14a wird also im Normalbetrieb des sicherheitsrelevanten Systems nicht belastet und weist daher im Normalbetrieb immer mindestens ihre Nennspannung U₂ auf. Darüber hinaus kommt es im Normalbetrieb nicht zu einer unbeabsichtigten Ladung der Batterie 14a durch die Batterie 6 über das Umschaltelement 16a.

Kommt es in dem Bordnetz zu einem kritischen Spannungsabfall unter den Grenzwert, der durch U₂ vorgegeben ist und der Nennspannung der Batterie 14a entspricht, so liegt am Ausgang 22a des Umschaltelementes 16a ein kleineres Potential als am Eingang 24a des Umschaltelementes 16a an. Bei einem kritischen Spannungsabfall unter den Grenzwert von U₂ im Bordnetz kommt es somit automatisch zu einem Stromfluss von der Batterie 14a über das Umschaltelement 16a und das Relais 30a zu den elektrischen Verbrauchern 18a, so dass diese dann von der Batterie 14a mit Spannung versorgt werden. Hierbei steht die Batterie 14a ausschließlich für die Spannungsversorgung der elektrischen Verbraucher 18a zur Verfügung, da ein Stromfluss von der Batterie 14a in das Bordnetz durch die Diode 8a ausgeschlossen ist. Das Relais 30a schließt den Schalter 32a, so dass bei einer Energieversorgung des Systems durch die Batterie 14a der Warnungsmelder 20a automatisch betätigt wird.

Weist das Bordnetz wieder eine Betriebsspannung auf, die über U₂ liegt, so liegt auch am Ausgang 22a des Umschaltelementes 16a automatisch ein Potential an, das über U₂ liegt (der Spannungsabfall an der Diode 8a und der Sicherung 10a kann vernachlässigt werden), so dass das sicherheitsrelevante System wieder automatisch in den Normalbetrieb umschaltet.

Im Folgenden wird erläutert, wie die Batterie 14a durch das Bordnetz geladen wird. Die Batterie 14a kann z.B. während des Fahrbetriebes des Kraftfahrzeuges durch das Bordnetz permanent geladen werden. Über (in der Fig. 1 nicht gezeigte) Sensoren, die z.B. die Batterietemperatur der Batterie 14a messen, wird ermittelt, welche Ladespannung momentan notwendig ist, um die Batterie 14a optimal laden zu können. Diese Information wird an die Lade-/Trennschaltung 12a weitergegeben. Ist eine Nachladung der Batterie 14a notwendig, so wird in der Lade-/Trennschaltung 12a der Schalter 28a geschlossen, so dass die Batterie 14a über die Diode 8a und die Sicherung 10a und die Lade-/Trennschaltung 12a mit dem Bordnetz in Verbindung steht und von diesem geladen wird. Die Lade-/Trennschaltung weist Elemente auf, die die dem Bordnetz dem Bordnetz bereitgestellte momentane Betriebsspannung auf die momentan benötigte Ladespannung zur optimalen Ladung der Batterie 14a transformieren. Ist die Batterie 14a wieder aufgeladen, so wird eine entsprechende Information wiederum an die Lade/Trennschaltung 12a übermittelt. Daraufhin wird der Schalter . 28a geöffnet, so dass der Ladevorgang der Batterie 14a abgeschlossen ist.

Es ist festzustellen, dass eine Ladung der Batterie 14a durch das Bordnetz immer möglich ist, wenn die momentane Betriebsspannung im Bordnetz größer ist als die momentane Betriebsspannung an der Batterie 14a. Ein Nachladen der Batterie 14a ist also auch dann noch möglich, wenn das Bordnetz durch einen hohen elektrischen Verbrauch stark belastet ist.

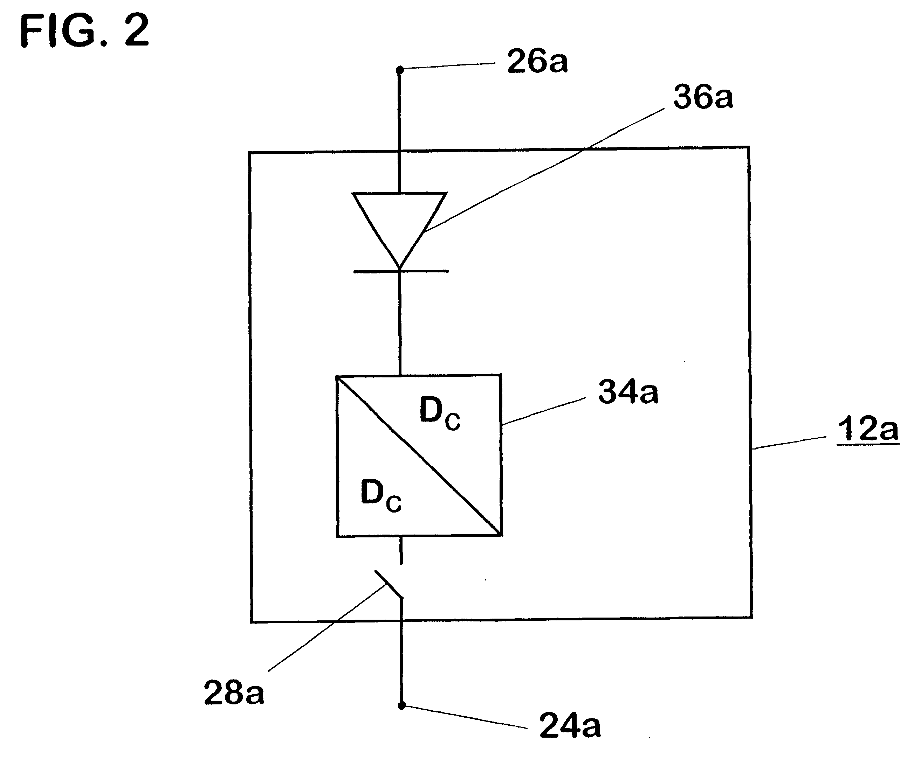

Figur 2 zeigt in stark schematischer Darstellung eine Lade/Trennschaltung 12a, die einen Schalter 28a, einen DC/DC-Spannungstransformator und eine Diode 36a aufweist. Mittels des Schalters 28a wird die Batterie 14a mit dem Bordnetz zum Aufladen verbunden. In dem DC/DC-Spannungstransformator wird die von dem Bordnetz bereitgestellte Spannung auf die für eine optimale Ladung benötigte Ladespannung für die Batterie 14a transformiert. Die Diode 36a verhindert, dass über die Lade/Trennschaltung ein Stromfluss von der Batterie 14a zu den Verbrauchern 18a entstehen kann. Somit ist einer Entleerung der Batterie 14a über die Lade-/Trennschaltung 12a auch dann vorgebeugt, wenn sich im Normalbetrieb der Schalter 28a irrtümlicherweise schließt.

### Bezugszeichenliste

- 2: Generator
- 4: Ladekreis
- 6: erster elektrischer Energiespeicher in Form einer Batterie
- 8a, b: Diode
- 10a, b: Sicherung
- 12a, b: Lade-/Trennschaltung
- 14a, b: zweiter elektrischer Energiespeicher in Form einer Batterie
- 16a, b: Umschaltelement
- 18a, b: elektrische Verbraucher des sicherheitsrelevanten Systems
- 20a, b: Warnungsmelder
- 22a, b: Ausgang
- 24a, b: Eingang
- 26a, b: Punkte
- 28a, b: Schalter
- 30a, b: Erreger
- 32a, b: Schalter
- 34a, b: Spannungstransformator
- 36a, b: Diode

## Patentansprüche

1. Sicherheitsrelevantes System, wie z.B. eine elektrische Bremsanlage oder eine elektrische Lenkanlage für ein Kraftfahrzeug, mit
- Verbrauchern (18a, 18b), die mit elektrischer Energie betrieben werden
- einer elektrischen Energiequelle (6), die im Normalbetrieb die Verbraucher (18a, 18b) mit elektrischer Energie versorgt
- einem elektrischen Energiespeicher (14a, 14b), der die Verbraucher (18a, 18b) mit elektrischer Energie versorgt, wenn an der elektrischen Energiequelle (6) die momentane Betriebsspannung unter einen Grenzwert fällt und eine Nennspannung aufweist, die kleiner ist als die Nennspannung der Energiequelle (6)
- einem Umschaltelement (16a, 16b), das zwischen einem dem Energiespeicher (14a, 14b) zugewandten Eingang (14a, 14b) und einem den Verbrauchern (18a, 18b) zugewandten Ausgang (22a, 22b) liegt und das den Energiespeicher (14a, 14b) mit den Verbrauchern (18a, 18b) verbindet, wenn an der elektrischen Energiequelle (6) die momentane Betriebsspannung unter den Grenzwert fällt und das die Funktion einer Diode ausübt, deren Durchlassrichtung von dem Energiespeicher (14a, 14b) zu den Verbrauchern (18a, 18b) weist, wobei am Eingang (24a, 24b) des Umschaltelementes (16a, 16b) das Potential anliegt, das der momentanen Betriebsspannung des Energiespeichers (14a, 14b) entspricht, und am Ausgang (22a, 22b) des Umschaltelementes (16a, 16b) bis auf parasitäre Spannungsabfälle das Potential anliegt, das der momentanen Betriebsspannung der Energiequelle (6) entspricht,
**dadurch gekennzeichnet, dass**
die elektrische Energiequelle (6) über eine Lade-/Trennschaltung (12a, 12b) mit dem elektrischen Energiespeicher (14a, 14b) verbindbar ist, wobei die Lade-/Trennschaltung (12a, 12b) die Verbindung zwischen der elektrischen Energiequelle (6) und dem elektrischen Energiespeicher (14a, 14b) erstellt, wenn der elektrische Energiespeicher (14a, 14b) geladen werden soll.

2. Sicherheitsrelevantes System nach Anspruch 1, **dadurch gekennzeichnet, dass** die Lade-/Trennschaltung (12a, 12b) ein oder mehrere Elemente aufweist, das bzw. die die Funktion eines Spannungstransformators ausüben und das bzw. die die von der elektrischen Energiequelle (6) bereitgestellte momentane Betriebsspannung auf die Ladespannung transformieren, die zur Ladung des zweiten elektrischen Energiespeichers (14a, 14b) benötigt wird.

3. Sicherheitsrelevantes System nach einem der Ansprüche 1 bis 2, **dadurch gekennzeichnet, dass** das System einen Wamungsmelder (20a, 20b) enthält, der automatisch ein Warnsignal abgibt, wenn durch das Umschaltelement (16a, 16b) ein Strom fließt.

## Claims

1. Fail-safe system, such as, for example, an electrical braking system or an electrical steering system for an automotive vehicle, having
- consumers (18a, 18b), which are operated with electrical energy,
- an electrical energy source (6) which, during normal operation, supplies the consumers (18a, 18b) with electrical energy,
- an electrical energy storage unit (14a, 14b), which supplies the consumers (18a, 18b) with electrical energy when the instantaneous operational voltage at the electrical energy source (6) drops below a limit value and has a nominal voltage which is smaller than the nominal voltage of the energy source (6), and
- a switch-over element (16a, 16b), which lies between an input (24a, 24b) facing the energy storage unit (14a, 14b) and an output (22a, 22b) facing the consumers (18a, 18b), and which connects the energy storage unit (14a, 14b) to the consumers (18a, 18b) when the instantaneous operational voltage at the electrical energy source (6) drops below the limit value, and which operates as a diode, the conducting direction of said diode pointing from the energy storage unit (14a, 14b) to the consumers (18a, 18b), the potential being applied to the input (24a, 24b) of the switch-over element (16a, 16b) and corresponding to the instantaneous operational voltage of the energy storage unit (14a, 14b), and the potential being applied to the output (22a, 22b) of the switch-over element (16a, 16b) even to parasitic voltage drops, which potential corresponds to the instantaneous operational voltage of the energy source (6),
**characterised in that**
the electrical energy source (6) is connectable to the electrical energy storage unit (14a, 14b) via a charging/disconnecting circuit (12a, 12b), the charging/disconnecting circuit (12a, 12b) establishing the connection between the electrical energy source (6) and the electrical energy storage unit (14a, 14b) when the electrical energy storage unit (14a, 14b) is to be charged.

2. Fail-safe system according to claim 1, **characterised in that** the charging/disconnecting circuit (12a, 12b) has one or more elements which operates, or respectively operate as a voltage transformer, and which transforms, or respectively transform, the instantaneous operational voltage, which has been prepared by the electrical energy source (6), to the charging voltage which is required to charge the second electrical energy storage unit (14a, 14b).

3. Fail-safe system according to one of claims 1 to 2, **characterised in that** the system includes a warning indicator (20a, 20b), which automatically issues a warning signal when a current flows through the switch-over element (16a, 16b).

## Revendications

1. Système important du point de vue sécurité, comme par exemple une installation de frein électrique ou une installation de direction électrique pour un véhicule automobile, comportant :
◆ des appareils d'utilisation (18a, 18b) qui fonctionnent avec une énergie électrique,
◆ une source d'énergie électrique (6) qui, dans le fonctionnement normal, alimente les appareils d'utilisation (18a, 18b) avec une énergie électrique,
◆ un accumulateur d'énergie électrique (14a, 14b), qui alimente les appareils d'utilisation (18a, 18b) avec une énergie électrique, lorsque la tension instantanée de fonctionnement tombe au-dessous d'une valeur limite au niveau de la source d'énergie électrique (6) et possède une tension nominale, qui est inférieure à la tension nominale de la source d'énergie (6),
◆ un élément de commutation (16a, 16b), qui est situé entre une entrée (14a, 14b), tournée vers l'accumulateur d'énergie (14a, 14b), et une sortie (22a, 22b) tournée vers les appareils d'utilisation (18a, 18b) et qui relie l'accumulateur d'énergie (14a, 14b) aux appareils d'utilisation (18a, 18b), lorsque la tension instantanée de fonctionnement tombe au-dessous de la valeur limite au niveau de la source d'énergie électrique (6), et qui assume la fonction d'une diode, dont le sens passant est dirigé de l'accumulateur d'énergie (14a, 14b) vers les appareils d'utilisation (18a, 18b), auquel cas à l'entrée (24a, 24b) de l'élément de commutation (16a, 16b) est présent le potentiel qui correspond à la tension instantanée de fonctionnement de l'accumulateur d'énergie (14a, 14b), et à la sortie (22a, 22b) de l'élément de commutation (16a, 16b) est présent, en dehors de chutes de tension parasites, le potentiel qui correspond à la tension instantanée de fonctionnement de la source d'énergie (6),
**caractérisé en ce que** la source d'énergie électrique (6) peut être reliée à l'accumulateur d'énergie électrique (14a, 14b) par l'intermédiaire d'un circuit de charge/séparation (12a, 12b), le circuit de charge/séparation (12a, 12b) établissant la liaison entre la source d'énergie électrique (6) et l'accumulateur d'énergie électrique (14a, 14b), lorsque l'accumulateur d'énergie électrique (14a, 14b) doit être chargé.

2. Système important du point de vue sécurité selon la revendication 1, **caractérisé en ce que** le circuit de charge/séparation (12a, 12b) comporte un ou plusieurs éléments, qui assument la fonction d'un transformateur de tension et qui transforment la tension instantanée de fonctionnement, fournie par la source d'énergie électrique (6), en la tension de charge, qui est nécessaire pour la charge du second accumulateur d'énergie (14a, 14b).

3. Système important du point de vue sécurité selon l'une des revendications 1 et 2, **caractérisé en ce que** le système contient un dispositif de signalisation d'avertissement (20a, 20b), qui délivre automatiquement un signal d'avertissement lorsqu'un courant circule dans l'élément de commutation (16a, 16b).
